Europäisches Patentamt

**European Patent Office**

**Office européen des brevets**

(11) Numéro de publication: **0 029 470**

**A1**

# (12) DEMANDE DE BREVET EUROPEEN

(21) Numéro de dépôt: **79200773.4**

(22) Date de dépôt: **17.12.79**

(51) Int. Cl.³: **A 01 D 46/02**
**A 01 D 46/20**

(30) Priorité: **22.11.79 BE 198239**

(43) Date de publication de la demande:
**03.06.81 Bulletin 81/22**

(84) Etats Contractants Désignés:
**DE FR GB**

(71) Demandeur: **Cornette, Maurice**
**Rue de Fontaine St. Pierre, 28**
**B-6360 Romedenne(BE)**

(72) Inventeur: **Cornette, Maurice**
**Rue de Fontaine St. Pierre, 28**
**B-6360 Romedenne(BE)**

(74) Mandataire: **Pirson, Jean et al,**
**C/O Bureau GEVERS S.A. 7, rue de Livourne**
**B-1050 Brussels(BE)**

(54) **Installation permettant la cueillette du houblon.**

㉗ Installation permettant la cueillette mécanique des tiges de houblon 10 développées le long de tuteurs et comprenant un châssis 4 monté sur un tracteur 2, une nacelle 6 montée sur un bras articulé 5 sur ce châssis et qui peut être installée à la hauteur requise par rapport à l'extrémité supérieure de la tige de houblon et de son tuteur pour permettre de sectionner manuellement cette extrémité supérieure du tuteur et un méchanisme sectionneur 17 de la base du même tuteur, l'inclinaison du bras étant telle qu'elle permet de déposer, dans de bonnes conditions sur une remorque 1, le houblon accroché à un tuteur sectionné à sa base et à son extrémité supérieure.

EP 0 029 470 A1

./...

Fig. 1

"Installation permettant la cueillette du houblon"

On sait que le houblon est une plante grimpante développant des tiges qui s'enroulent à l'aide de vrilles sur des fils de fer ou, dans certains cas, sur des cordes. La longueur des tiges enroulées sur lesdits fils de fer ou lesdites cordes peut atteindre 6 mètres. La cueillette des tiges ou sarments de houblon est une opération fastidieuse attendu qu'il est nécessaire de couper aussi bien la base que le sommet du fil de fer ou de la corde. Il est courant d'appeler tuteurs ces fils de fer ou cordes servant de supports au houblon.

Dans la pratique les plants de houblon sont disposés en rangées parallèles et chaque plant développe deux tiges principales qui sont guidées à l'écart l'une de l'autre. Les deux tiges d'un même plant s'écartent le long de leur tuteur selon des angles relativement faibles et ceci est la cause qu'à une certaine hauteur du sol il se provoque un enchevêtrement des sarments tel qu'il est difficile de recueillir séparément la végétation qui s'est développée le long d'un seul tuteur.

L'invention a pour but de remédier aux inconvénients des méthodes et procédés en usage à ce jour et de réaliser une installation qui permet un travail de récolte accéléré tout en épargnant une partie de la main-d'oeuvre généralement utilisée dans ce but.

A cet effet l'installation selon l'invention comprend un châssis monté sur un tracteur, une nacelle montée sur un bras articulé sur ce châssis et qui peut être installée à la hauteur requise par rapport à l'extrémité supérieure de la tige de houblon et de son tuteur pour permettre à un opérateur qui a pris place dans la nacelle de sectionner manuellement cette extrémité supérieure du tuteur et un mécanisme sectionneur de la base du même tuteur, l'inclinaison du bras précité étant telle que l'opérateur précité se trouve placé au-dessus d'une remorque pour lui permettre de déposer, dans de bonnes conditions sur cette remorque, le houblon accroché à un tuteur sectionné à sa base et à son extrémité supérieure.

Selon une forme de réalisation avantageuse le mécanisme sectionneur précité est un couteau rotatif monté sur un axe vertical fixe et qui coopère avec un bras mobile qui peut amener la partie du tuteur à sectionner au contact du couteau rotatif précité lorsque le conducteur du tracteur agit par un levier sur ce bras mobile.

Une particularité remarquable de l'invention réside dans le fait que l'installation comporte, en outre, un couteau monté en oblique, sensiblement dans un plan vertical pour sectionner, au cours du déplacement de l'installation, les rameaux enchevêtrés provenant des tiges qui se sont développées à partir d'un même plant, mais qui ont été guidées sur des tuteurs appartenant à des rangées parallèles.

D'autres détails et avantages de l'invention ressortiront de la description qui sera donnée ci-après d'une installation permettant la cueillette mécanique du houblon, cette description n'est donnée qu'à titre d'exemple et se rapporte aux figures ci-annexées.

La figure 1 est une vue schématique en élévation illustrant le fonctionnement de l'installation selon l'invention.

La figure 2 montre, en plan, et également de façon schématique une partie de l'installation principalement à hauteur du bras commandé par le conducteur du tracteur.

Dans ces figures les mêmes notations de références se rapportent à des éléments identiques.

L'installation selon l'invention comporte un châssis fixé sur un tracteur suivi d'une remorque. Cette remorque 1 tirée par le tracteur 2 y est accouplée par tout mécanisme approprié schématisé par exemple par les moyens d'attache 3.

A l'arrière du tracteur 2 est fixé un châssis 4 auquel s'articule le bras 5 supportant, à son extrémité supérieure, la nacelle 6; un vérin non représenté permet l'extension du bras 5. Une ligne 7 relie l'avant du tracteur à la nacelle. Un tendeur ou vérin 8 permet de régler la position vers la gauche ou la droite de la nacelle 6 dans laquelle a pris place l'opérateur 9. Un support horizontal 23, monté sur deux appuis 24, eux-mêmes disposés en oblique vers le haut et fixés au châssis de l'installation fournit un appui au bras 5.

Sur la remorque 1 citée plus haut sont disposées des tiges verticales 16 entre lesquelles un opérateur 9' introduit la base d'une plante 10 tandis que l'opérateur 9 qui a sectionné la partie supérieure du tuteur de la plante laisse choir celle-ci sur la remorque.

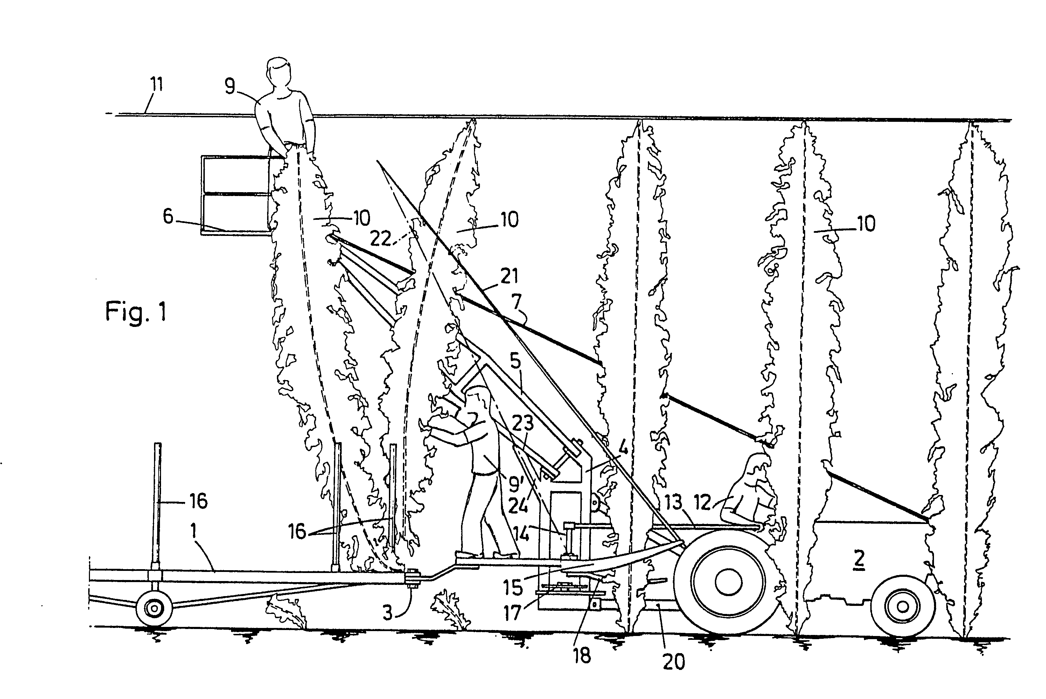

Si l'on réfère une nouvelle fois à la figure 1 on remarque que la référence 11 désigne un câble qui, de manière connue en soi dans la technique de la culture du houblon, a été tendu entre des poteaux d'assez grande dimension dont la base a été enfoncée dans le sol. A ce câble 11 sont fixés des tuteurs qui ne sont pas visibles aux figures et qui peuvent être constitués, comme il a été dit plus haut, par des fils de fer ou de la corde. L'opérateur 9, dans la nacelle 6, sectionne la partie supérieure du "tuteur" tandis que le conducteur 12 du tracteur 2 peut agir sur un levier de commande 13 relié au bras 15 pivotant lui-même sur un axe vertical 14 pour diriger, si nécessaire, les tiges de houblon et leurs tuteurs vers le couteau rotatif 17. Un déflecteur fixe 18 guide les plantes et leurs tuteurs en direction de ce couteau rotatif 17.

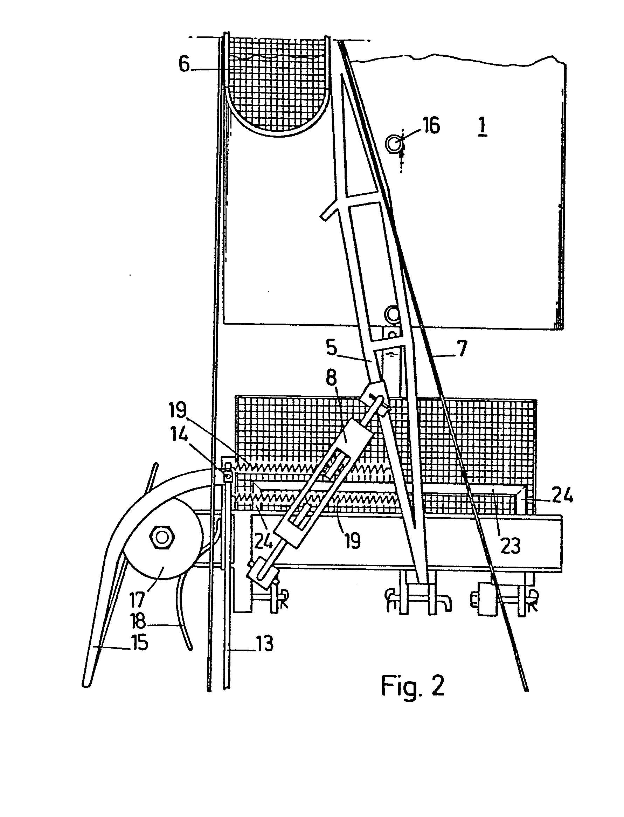

Des ressorts 19 (figure 2) ramènent le bras 15 et le levier de commande 13 dans leur position de repos. Un seul ressort à lame peut exercer la même fonction.

Le couteau 17 peut être entraîné en rotation par tout système de tiges et de pignons en relation avec la prise de force 20 du tracteur ou par un moteur hydraulique.

Un couteau 21 monté en oblique vers l'arrière sectionne les sarments des tiges de houblon appartenant à des rangées parallèles qui se sont enchevêtrées à partir d'une certaine hauteur au-dessus du sol. La fonction de ce couteau est extrêmement importante et est essentielle pour permettre à l'installation de fonctionner selon le schéma suggéré.

Le couteau peut avoir toute forme ou dimension requise et être soutenu, à sa base, sur des éléments appartenant au châssis de l'installation (par exemple le bras 15) et, au sommet, par une ou deux tiges schématisées sous la référence 22.

De la description qui est donnée il apparaît clairement que le travail de récolte des tiges de houblon peut, dans une houblonière du type classique, s'effectuer dans d'excellentes conditions et avec un minimum de main-d'oeuvre.

## REVENDICATIONS

1. Installation permettant la cueillette mécanique des tiges de houblon qui se sont développées le long de tuteurs tels que des fils de fer ou des cordes disposés en rangées parallèles, caractérisée en ce qu'elle comprend un châssis monté sur un tracteur, une nacelle montée sur un bras articulé sur ce châssis et qui peut être installée à la hauteur requise par rapport à l'extrémité supérieure de la tige de houblon et de son tuteur pour permettre à un opérateur qui a pris place dans la nacelle de sectionner manuellement cette extrémité supérieure du tuteur et un mécanisme sectionneur de la base du même tuteur, l'inclinaison du bras précité étant telle que l'opérateur précité se trouve placé au-dessus d'une remorque pour lui permettre de déposer, dans de bonnes conditions sur cette remorque, le houblon accroché à un tuteur sectionné à sa base et à son extrémité supérieure.

2. Installation selon la revendication 1, caractérisée en ce que le bras précité, articulé sur le châssis du tracteur, prend appui sur un support horizontal monté sur deux appuis verticaux solidaires de l'installation pour permettre au bras précité d'exécuter un mouvement de translation le long du support précité sous l'influence d'un verin ou d'un organe analogue.

3. Installation selon la revendication 1, caractérisée en ce que le mécanisme sectionneur précité est un couteau rotatif monté sur un axe vertical fixe et qui coopère avec un bras mobile qui peut amener la partie du tuteur à sectionner au contact du couteau rotatif précité lorsque le conducteur du tracteur agit par un levier sur le bras mobile.

4. Installation selon la revendication 3 caractérisée en ce que le bras mobile précité présente une partie courbe destinée à aggriper les tiges de houblon et leur tuteur et à les diriger sur le couteau rotatif précité, tandis qu'au moins un ressort de rappel de ce bras mobile est prévu.

5. Installation selon l'une quelconque des revendications 1 à 4, caractérisée en ce qu'elle comporte, en outre, un couteau monté en oblique vers l'arrière sensiblement dans un plan vertical pour sectionner, au cours du déplacement de l'installation, les rameaux enchevêtrés provenant des tiges qui se sont développées à partir d'un même plant mais qui ont été guidées sur des tuteurs appartenant à des rangées parallèles.

Fig. 1

Fig. 2

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| | **DOCUMENTS CONSIDERES COMME PERTINENTS** | |
| X | <u>BE - A - 872 353</u> (CORNETTE) <br> * Totalité du document * <br><br> -- <br><br> <u>US - A - 3 285 365</u> (LONGTON) <br> * Totalité du document * <br><br> ---- | 1,3,4 <br><br><br><br> 1 |

**CLASSEMENT DE LA DEMANDE (Int. Cl. 3)**

A 01 D 46/62
46/20

**DOMAINES TECHNIQUES RECHERCHES (Int. Cl. 3)**

A 01 D 46/02
46/20

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 26-02-1981 | HERYGERS |

OEB Form 1503.1 06.78